# EUROPÄISCHE PATENTSCHRIFT

(11) **EP 1 721 676 B1**
(45) Veröffentlichungstag und Bekanntmachung des Hinweises auf die Patenterteilung: **29.12.2010**
(21) Anmeldenummer: 06017837.3
(22) Anmeldetag: 11.09.2001
(51) Int. Cl.: B03B 9/06, C22B 7/00, C22B 11/06

(54) **Verfahren zur Aufbereitung von Shredder-Rückständen zur Erzeugung einer Flusen-Fraktion**
Method for processing shredder residues for producing of a lint fraction
Procédé de traitement de résidus de déchiquetage pour la production d'une fraction de peluche

(30) Priorität: 27.10.2000 DE 10053491
(43) Veröffentlichungstag der Anmeldung: 15.11.2006
(62) Teilanmeldung aus: 01982271.7
(73) Patentinhaber: Volkswagen AG, 38436 Wolfsburg (DE)
(72) Erfinder: Knust, Michael, 38550 Isenbüttel (DE); den Dunnen, Bram, 38106 Braunschweig (DE); Goldmann, Daniel, Dr., 38640 Goslar (DE)

(56) Entgegenhaltungen:
- WO-A-00/53324
- DE-A- 19 755 629
- RUDOLPH K-U ET AL: "STAND DER BEHANDLUNG UND VERWERTUNG VON SHREDDERRUECKSTAENDEN AUS ALTAUTOS" MUELL UND ABFALL, SCHMIDT VERLAG, BERLIN, DE, Bd. 29, Nr. 12, 1. Dezember 1997 (1997-12-01), Seiten 745-755, XP000730441 ISSN: 0027-2957

## Beschreibung

Die Erfindung betrifft ein Verfahren zur Aufbereitung von Shredder-Rückständen metallhaltiger Abfälle, insbesondere von Fahrzeugkarossen.

Das Shreddern von Altfahrzeugen zum Materialaufschluss ist seit langem bekannt. Bei der Durchführung des Shredder-Prozesses haben sich Verfahrensführungen etabliert, bei denen das anfallende Stoffgemisch in verschiedene Fraktionen aufgeteilt wird. So wird zunächst mittels einer geeigneten Absaugvorrichtung eine so genannte Shredder-Leichtfraktion (SLF) vom anfallenden Stoffgemisch abgetrennt. Die verbleibende Fraktion wird anschließend mit einem Permanent-Magnetscheider in eine ferromagnetische Fraktion (Shredder-Schrott (SS)) und eine nicht-ferromagnetische Fraktion (Shredder-Schwerfraktion (SSF)) aufgetrennt. Der Anteil der metallurgisch vollständig verwertbaren Shredder-Schrott-Fraktion liegt häufig bei zirka 50 bis 75 Gew.%. Die Shredder-Leichtfraktion wurde nach bisherigen Konzepten in der Regel als Abfall deponiert oder in Müllverbrennungsanlagen verbrannt. Sie ist dadurch gekennzeichnet, dass sie sowohl einen hohen Organik- als auch einen hohen Feinkornanteil enthält. Die schwere, nicht-flugfähige sowie nicht-ferromagnetische Fraktion - also die Shredder-Schwerfraktion - zeichnet sich durch einen hohen Anteil an Nichteisen-Metallen (NE-Metalle) aus. Zur Wiedergewinnung der verschiedenen NE-Metalle sind spezielle Aufbereitungsanlagen entwickelt worden, bei denen allerdings der verbleibende Rest aus organischen und anorganischen, nicht-metallischen Komponenten in der Regel als Abfall deponiert wird. Unter Shredder-Rückständen sollen nachfolgend alle Stoffströme aus dem Shredderprozess verstanden werden, die nicht direkt am Shredder als metallurgisch direkt verwertbare Produkte abgezogen (Shredder-Schrott) werden können.

Aus der DE 44 37 852 A1 ist ein Verfahren bekannt, bei dem die Shredder-Leichtfraktion, insbesondere zwecks Entfernen von "unerwünschten Bestandteilen", insbesondere Kupfer und Glas, aufbereitet wird. Dabei werden die Shredder-Rückstände in einem Zwangsmischer homogenisiert und mit einem fein- bis feinstkörnigen, eine magnetisierbare Komponente enthaltenen Material vermischt sowie das resultierende Gemisch über einen Magnetscheider geführt. Es hat sich dabei gezeigt, dass die eine metallurgische Verwendung behindernden metallischen Bestandteile der Shredder-Leichtfraktion auf diese Weise abgetrennt werden können.

In der EP 0 863 114 A1 ist vorgesehen, einen dauerplastischen Bergbauversatzstoff zu schaffen, indem der Shredder-Leichtfraktion eine Bindemittelkomponente, ein Füllstoff und eine Salzlösung zugesetzt werden. Dadurch soll ein druckfester, dauerplastischer Körper geschaffen werden.

Aus der DE 197 42 214 C2 ist bekannt, die Shredder-Leichtfraktion weiter zu zerkleinern und einer thermischen Behandlung zu unterziehen. Während oder nach der Zerkleinerung sollen dabei metallische Bestandteile aussortiert werden und das verbleibende Stoffgemisch in einem Schmelzreaktor geschmolzen und durch Abkühlung zu einem "ungefährlichen" Feststoff umgewandelt werden.

Weiterhin offenbart die EP 0 922 749 A1 ein Verfahren zur Aufarbeitung der Shredder-Leichtfraktion, bei dem die Shredder-Leichtfraktion in einen Wirbelschichtvergaser und unter Einbringung von Kalziumkarbonat kalziniert wird.

In einem weiteren thermischen Verfahren sieht die DE 197 31 874 C1 vor, dass die Shredder-Leichtfraktion in einer weiteren Stufe erneut verpresst und dann zerkleinert, homogenisiert und im Wassergehalt reduziert wird, um in einer nachfolgenden Stufe thermisch verwertet zu werden.

In der EP 0 884 107 A2 ist vorgesehen, die Shredder-Leichtfraktion mittels Zerkleinerung, Klassierung und Sortierung in eine metallfreie Fraktion mit einer Zerkleinerungsstufe ≤ 20 mm zu überführen. Die Aufbereitung der Shredder-Leichtfraktion soll zu einer thermisch verwertbaren Fraktion führen.

Weiterhin befasst sich die DE 197 55 629 A1 mit der Aufbereitung einer Shredder-Leichtfraktion in verschiedene Fraktionen, wie Shreddersand, Shreddergranulat, Shredderflusen und Metallgranulat.

In der WO 00/53324 wird ein Verfahren zur Aufbereitung von Shredder-Leichtabfällen und Verbundstoffen unter Verwendung einer Rotorprallmühle beschrieben, wobei einer Vorzerkleinerung der Fraktionen eine Abscheidung von ferromagnetischen Metallteilen nachgeschaltet ist, deren Austrag einer Rotorprallmühle als Mittelpunkt des Verfahrensablaufes zugeführt wird. Der Rotorprallmühle folgen als nächste Verfahrensschritte eine Grobsiebung und eine Windsichtung, in deren Ergebnis die erhaltenen leichten Kunststoffe einer Verbrennung zugeführt werden können. Der restliche Austrag wird einer Abscheidung von nichtferromagnetischen Metallen zugeführt.

Zusätzlich wird in der DE 199 11 010 A1 ein Verfahren für die Verwertung von Shredderabfällen vorgeschlagen, deren Kern der Einsatz einer Rotorprallmühle ist, in weicher sowohl die Shredder-Schwerabfälle als auch die Shredder-Leichtabfälle zerkleinert werden. Um in einer einstufigen Hauptzerkleinerung einen ausreichenden Aufschluss aller Bestandteile zu erreichen, ist eine massive Krafteinwirkung auf die Partikel notwendig. Hierdurch kann es zu einer eigentlich ungewollten Imprägnation oder einem Einpressen etwa von duktilen Kupferlitzen in Hartkunststoffpartikel kommen. Passiert dies, lassen sich keine metallarmen Kunststoff-Fraktionen mehr gewinnen. Des Weiteren zielt das Verfahren im Wesentlichen nur darauf ab, dass Metallbestandteile abgetrennt werden.

Neben den aufgezeigten Verwertungsverfahren ist es bekannt, die Shredder-Leichtfraktion einer Vorbehandlung zu unterziehen, bei der ferromagnetische Restfraktionen aus Eisen, V2A-Stahl und Aluminium abgetrennt werden. Ähnliche Verfahren sind auch bei der Aufbereitung der Shredder-Schwerfraktion zum Einsatz gekommen. Darüber hinaus ist es bekannt, von dieser Fraktion Polyolefine abzutrennen.

Den aufgezeigten Verfahren ist gemeinsam, dass eine möglichst weitgehende Auftrennung der Shredder-Rückstände zu zumindest teilweise verwertbaren Fraktionen, insbesondere einer rohstofflich oder energetisch verwertbaren Flusen-Fraktion, gemäß aktuellen rechtlichen Rahmenbedingungen, nicht vorgesehen ist. Vor dem Hintergrund steigender gesetzlicher Anforderungen (EU-Altautorichtlinie, EU-Verbrennungsrichtlinie und andere) und auch steigender Deponiekosten und Anforderungen an das zu deponierende Gut, ist eine erhöhte Verwertungsquote jedoch wünschenswert. So sieht die Altautoverordnung vom 1. April 1998 vor, dass ab dem Jahre 2015 über 95 Gew.% eines Altautos verwertet werden müssen. Verschärfte Anforderungen aus der im September 2000 verabschiedeten EU-Altautorichtlinie schreiben darüber hinaus vor, den Anteil werkstoff- und rohstofflich nutzbarer Stoffströme auf mindestens 85 Gew.% zu steigern. Eine Verwertung schließt demnach eine bloße energetische Nutzung, zum Beispiel in Müllverbrennungsanlagen, aus. Für eine mögliche rohstoffliche oder energetische Verwertung der anfallenden Flusen-Fraktion in Hochöfen, Zementwerken oder Klärschlamm-Verbrennungsanlagen muss insbesondere sichergestellt sein, dass störende Schwermetalle, die in anhaftenden Stäuben und verhakten Drähten und Litzen auftreten, weitestgehend entfernt werden.

Der Erfindung liegt daher die Aufgabe zugrunde, ein Verfahren zur Verfügung zu stellen, mit dem Shredder-Rückstände verarbeitet werden können und in einem mechanischen Aufbereitungsprozess insbesondere mindestens eine qualitativ hochwertige und rohstofflich oder einergetisch verwertbare Flusen-Fraktion erzeugbar ist.

Erfindungsgemäß wird diese Aufgabe durch ein Verfahren zur Aufbereitung von Shredder-Rückständen metallhaltiger Abfälle, insbesondere von Fahrzeugkarossen, mit den im Anspruch 1 genannten Merkmalen gelöst.

Das erfindungsgemäße Verfahren zeichnet sich dadurch aus, dass in einem Hauptprozess eine Rohflusen-Fraktion erzeugt wird und von der Rohflusen-Fraktion in einem Veredlungsprozess eine metallarme Flusen-Fraktion abgetrennt wird. Dem Hauptprozess wird ein Stoffstrom zugeführt, der erhalten ist durch die Auftrennung der Shredder-Rückstände in eine Shredder-Leichtfraktion und eine Shredder-Schwerfraktion und durch die Aufbereitung der Shredder-Leichtfraktion in einem Vorprozess, wobei die Prozesse eine Abscheidung von wenigstens einer ferromagnetischen Fraktion, einer Nichteisen-Metall-haltigen Fraktion, einer Granulat-Fraktion und einer Sandfraktion aufweisen.

Vorzugsweise erfolgt die Veredlung der Rohflusen-Fraktion durch Auftrennung in mindestens zwei der Fraktionen metallhaltige Staub-Fraktion, die metallarme Flusen-Fraktion und Metall-Fraktion, wobei die Auftrennung der Rohflusen-Fraktion vorzugsweise durch mindestens zwei der Prozessschritte Metallverkugelung, Entstaubung und/oder Dichtetrennung durchgeführt wird. Diese Prozessschritte werden vorteilhaft in der angegebenen Reihenfolge durchgeführt.

Die bereitgestellten Endprodukte können entweder direkt einer Verwertung zugeführt werden oder gegebenenfalls in weiteren Veredlungsschritten zu verwertbaren Produkten höherer Qualität weiter verarbeitet werden. Die Flusen-Fraktion kann dann insbesondere Einsatz in Hochöfen, Zementwerken oder Klärschlamm-Verbrennungsanlagen finden. Die für einen solchen Einsatz bereitzustellende Flusen-Fraktion weist vorzugsweise mindestens folgende weitere Charakteristika auf:
- einen Heizwert von > 20 MJ/kg
- einen Cl-Gehalt < 3,0 Gew.%
- einen Zn-Gehalt < 1,0 Gew.%
- einen Cu-Gehalt < 0,2 Gew.%
- einen Pb-Gehalt < 0,1 Gew.%.

Erst durch die weitestgehende Entfernung der störenden Metallpartikel und anhaftenden Stäube ist es möglich, Flusen-Fraktionen aus Shredder-Rückständen wirtschaftlich sinnvoll und in groβern Umfang einer rohstofflichen oder energetischen Verwertung zugänglich zu machen. Chlorarm bzw. metallarm bedeutet, dass entweder die obigen Grenzen eingehalten sind und/oder in diesem Granulat gegenüber dem Rohgranulat mindestens 50 Gew.%, insbesondere 70 Gew.% weniger Chlor bzw. Metall enthalten ist.

Als Endprodukte werden damit mindestens eine hochwertige Flusen-Fraktion, eine ferromagnetische Fraktion, eine Nichteisen-Metall-haltige Fraktion, eine Granulat-Fraktion und eine Sand-Fraktion erzeugt.

Gemäß einer Weiterbildung der Erfindung wird dem Hauptprozess ein weiterer Stoffstrom zugeführt, der erhalten ist durch die Auftrennung der Shredder-Rückstände in die Shredder-Leichtfraktion und die Shredder-Schwerfraktion und durch die Aufbereitung der Shredder-Schwerfraktion in einem Vorprozess, wobei die Prozesse eine Abscheidung wenigstens einer ferromagnetischen Fraktion, einer Nichteisen-Metall-haltigen Fraktion, einer Granulat-Fraktion und einer Sand-Fraktion aufweisen.

Aus der Shredder-Leichtfraktion werden vorzugsweise in einer Vorbehandlung aufgeschlossene Fe-, V2A- und AI-Anteile abgetrennt. Vorzugsweise wird diese Shredder-Leichtfraktion
- in einem ersten Zerkleinerungsaggregat aufgeschlossen,
- anschließend mittels wenigstens eines Magnetscheiders in mindestens eine ferromagnetische Fraktion und eine nicht-ferromagnetische Fraktion aufgetrennt,
- in einem zweiten Zerkleinerungsaggregat die nicht-ferromagnetische Fraktion aufgeschlossen,
- von dieser Fraktion mittels wenigstens einer Klassiereinrichtung eine feinkörnige Sand-Fraktion abgetrennt und
- die verbleibende Fraktion in wenigstens einer Dichtetrennungseinrichtung in eine Rohflusen-Fraktion und eine grobkörnige Schwergut-Fraktion aufgetrennt.

Durch die aufgezeigte Vorgehensweise mit dem stufenweisen Aufschluss der Shredder-Leichtfraktion und den zwischengeschalteten Verfahrensschritten zur Trennung der besonders abrasiv wirkenden ferromagnetischen Bestandteile, können die Betriebskosten insbesondere beim zweiten Zerkleinerungsaggregat geringgehalten werden. Eine weitere bevorzugte Ausführung sieht vor, dass im Vorprozess mittels einer Absaugeinrichtung zusätzlich eine Schaumstoff-Fraktion - im Wesentlichen aus Polyurethan bestehend - abgetrennt wird.

Weiterhin wird die Shredder-Schwerfraktion im Vorprozess vorzugsweise durch wenigstens einen Metallabscheider und wenigstens eine Klassiereinrichtung in wenigstens eine angereicherte, Nichteisen-Metall-haltige Fraktion, eine Schwergut-Fraktion und eine feinkörnige, metallarme Sand-Fraktion getrennt. Zusätzlich ist es denkbar, dass von der Schwergut-Fraktion in wenigstens einer Dichtetrennungseinrichtung eine hochdichte Restfraktion abgetrennt wird. Die Auftrennung der Shredder-Schwerfraktion in verschiedene Stoffströme wird unter dem Gesichtspunkt einer möglichen gemeinschaftlichen Verarbeitung mit dem zuvor bei den im Vorprozess der Verarbeitung der Shredder-Leichtfraktion entstehenden Stoffströmen vorgenommen. Im Hauptprozess werden die Stoffströme aus den Vorprozessen vorzugsweise derart zusammengeführt, dass
- die Sand-Fraktionen zu einer gemeinsamen Sand-Fraktion zusammengefasst werden und
- die Schwergut-Fraktionen zu einer gemeinsamen Schwergut-Fraktion zusammengefasst, mittels eines Zerkleinerungsaggregates aufgeschlossen und über eine Dichtetrennungseinrichtung in die Granulat-Fraktion und in eine angereicherte, Nichteisen-Metall-haltige Fraktion aufgetrennt werden.

In diesem Prozessteilschritt fallen demnach die gewünschten Endprodukte Sand, Granulat und die Nichteisen-Metall-haltige Fraktion an. Die Nichteisen-Metall-haltigen Fraktionen können dann vorzugsweise in einem gemeinsamen Aufbereitungsschritt mittels geeigneter Verfahrensschritte, zum Beispiel einer Sandflotation und einer optischen Sortierung, zur Abtrennung von Leichtmetall-, Buntmetall- und sonstigen Metall-Fraktionen unterzogen werden. Die bei der Abtrennung anfallenden, nicht-metallischen Restfraktionen können je nach Menge und Zusammensetzung an geeigneten Stellen in den Hauptprozess und/oder die Vorprozesse wieder eingespeist werden.

Die durch die aufgezeigten Aufbereitungsprozesse unter anderem bereitgestellte Rohflusen-Fraktion ist bereits ein homogenes Produkt, dass heißt, bestimmte flugfähige Bestandteile (PU), Metalle, Granulat und Sand sind bereits abgetrennt worden. Die Rohflusen-Fraktion kann aber erst durch die Veredelung von noch vorhandenen Metallpartikeln und anhaftenden Metallstäuben befreit werden. Vorzugsweise erfolgt dabei eine Verkugelung von Metalldrähten und - Litzen. Nach der Metallverkugelung erfolgt eine Entstaubung. Von der entstaubten Flusen-Fraktion werden in einer Dichtetrennungseinrichtung die verkugelten Metalle abgetrennt.

Weitere bevorzugte Ausgestaltungen des Verfahrens ergeben sich aus den übrigen verfahrensabhängigen Unteransprüchen.

Die Erfindung wird nachfolgend in einem Ausführungsbeispiel anhand der zugehörigen Zeichnungen näher erläutert. Es zeigen:
- Figur 1: eine Übersicht über die im Prozess der Aufbereitung der Shredder-Rückstände zu bestimmten Zeitpunkten entstehenden Endprodukte in einem Fließdiagramm und
- Figur 2: ein schematisches Fließdiagramm für die Prozessführung in den Vorprozessen und im Hauptprozess der Aufbereitung.

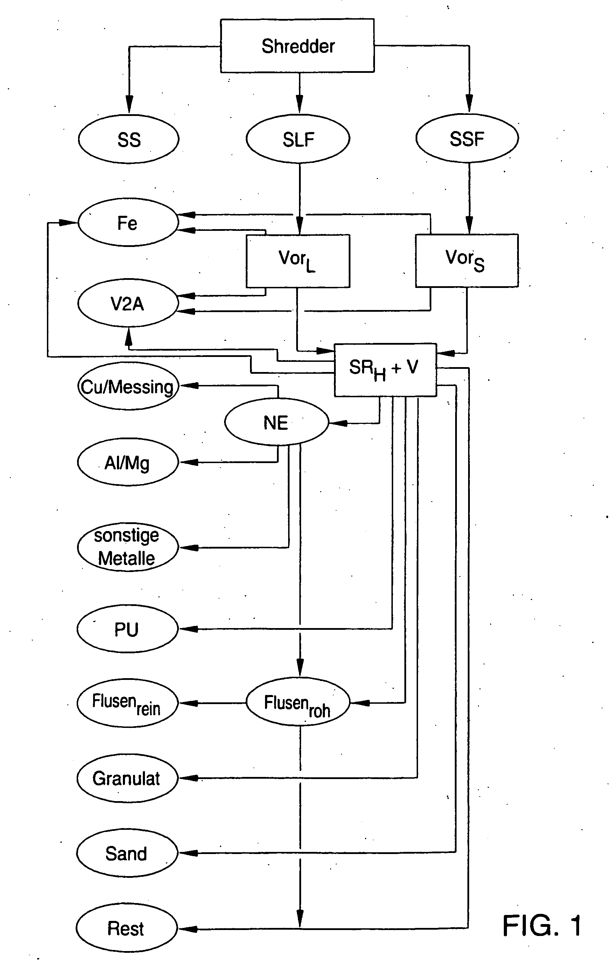

Die Figur 1 zeigt in einem Fließdiagramm, zu welchen Zeitpunkten Endprodukte nach dem erfindungsgemäßen Verfahren während der Aufbereitung der Shredder-Rückstände anfallen. Zunächst werden in einem an sich bekannten vorgeschalteten Shredderprozess in einem Shredder metallhaltige Abfälle, insbesondere von Fahrzeugkarossen, durch einen Zerkleinerungsprozess aufgeschlossen. Im Nachgang erfolgt eine Abtrennung einer flugfähigen Leichtfraktion durch eine Absaugvorrichtung (Shredder-Leichtfraktion SLF). Der nach der Absaugung verbleibende schwere, nicht-flugfähige Stoffstrom wird auf einem Permanent-Magnetscheider in eine ferromagnetische und eine nicht-ferromagnetische Fraktion getrennt. Die ferromagnetische Fraktion wird als Shredder-Schrott SS bezeichnet und stellt das primäre, direkt in der Metallurgie einsetzbare Produkt des Shredders dar. Die schwere, nicht-flugfähige sowie nicht-ferromagnetische Fraktion wird als Shredder-Schwerfraktion SSF bezeichnet. In einem weiteren, hier nicht dargestellten Vorbehandlungsschritt können von der Shredder-Leichtfraktion SLF mittels eines Magnetscheiders noch vorhandene ferromagnetische Bestandteile abgetrennt werden.
Der dann verbleibende Stoffstrom der Shredder-Leichtfraktion SLF sowie die Shredder-Schwerfraktion SSF werden nun gemeinschaftlich als Shredder-Rückstände in die gewünschten Endprodukte aufgetrennt.

Die Prozessführung sieht dazu einen Vorprozess Vor_{L} für die Shredder-Leichtfraktion SLF, einen Vorprozess Vor_{S} für die Shredder-Schwerfraktion SSF, einen gemeinsamen Hauptprozess SR_{H} und einen Veredelungsprozess V zur abschließenden Aufarbeitung zumindest eines Teiles der in den Vorprozessen Vor_{L}, Vor_{S} entstehenden primären Stoffströme vor. Als Endprodukte gemäß dem Ausführungsbeispiel entstehen Fraktionen, die überwiegend und mit möglichst hoher Reinheit aus Eisen Fe, Stahl V2A, Sand, Granulat, staub- und metallarme Flusen Flusen_{rein,} Schaumstoff PU und einem zu beseitigenden Rest bestehen. Weiterhin kann eine Nichteisen-Metall-haltige Fraktion NE abgetrennt werden, die durch entsprechende Prozessführung wiederum eine Aufteilung in Fraktionen mit Buntmetallen Cu/Messing, Leichtmetallen Al/Mg und sonstige Metalle ermöglicht. Die entstehenden Endprodukte können bis auf die Restfraktion einer metallurgischen, werkstofflichen, rohstofflichen und energetischen Verwertung zugeführt werden. Der Veredelungsprozess V kann insbesondere unter dem Gesichtspunkt der Bereitstellung einer staub- und metallarmen Flusen-Fraktion Flusenᵣₑᵢₙ ausgestaltet werden, die rohstofflich oder energetisch in Hochöfen, Zementwerken oder ähnlichen Anlagen verwertet wer den kann. Dazu muss die Flusen-Fraktion (Flusenᵣₑᵢₙ) mindestens folgende Charakteristika aufweisen:
- einen Heizwert von > 20 MJ/kg
- einen Cl-Gehalt < 3,0 Gew.%
- einen Zn-Gehalt < 1,0 Gew.%
- einen Cu-Gehalt < 0,2 Gew.%
- einen Pb-Gehalt < 0,1 Gew.%.

Die nachfolgend geschilderten Prozessschritte ermöglichen insbesondere die Separation einer Flusen-Fraktion Flusenᵣₑᵢₙ aus den heterogenen Shredder-Rückständen, welche der genannten Spezifikation entspricht.

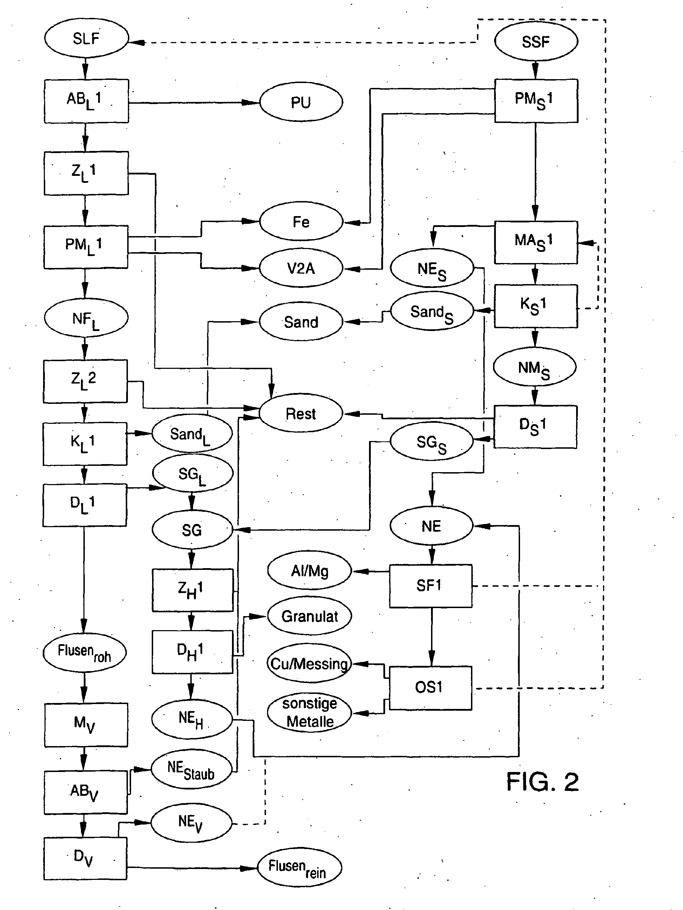

In der Figur 2 sind schematisch wesentliche Komponenten der Anlage zur Aufbereitung der Shredder-Rückstände und die jeweils während der Verfahrensführung an diesen Komponenten anfallenden Zwischen- oder Endprodukte in einem Fließdiagramm dargestellt. Der Übersicht wegen sind die während des Verfahrens erzeugten Endprodukte mittig angeordnet. Der Vorprozess Vor_{L} zur Aufbereitung der Shredder-Leichtfraktion SLF ist schematisch im linken oberen Teil, der Vorprozess Vor_{S} zur Aufbereitung der Shredder-Schwerfraktion SSF im rechten oberen Teil, der Hauptprozess SR_{H} mittig im unteren Teil und der Veredelungsprozess V im linken unteren Teil der Zeichnung dargestellt.

Die Shredder-Schwerfraktion SSF wird zunächst einer zweistufigen Fe- und V2A-Separation mittels eines Permanent-Magnetscheiders PM_{S}1 unterzogen. Nach der Fe- und V2A-Abscheidung erfolgen eine Klassierung des Reststromes und eine Abscheidung Nichteisen-Metall-haltiger Fraktionen NE_{S}. Dies kann beispielsweise derart erfolgen, dass zunächst eine Klassierung in verschiedene Fraktionen, beispielsweise größer und kleiner 20 mm, erfolgt und diese Fraktion jeweils separat dem Metallabscheider MA_{S}1 zugeführt werden. Denkbar sind selbstverständlich noch zusätzliche Klassierungsstufen. Im Vordergrund steht dabei eine möglichst saubere stoffliche Trennung in die Nichteisen-Metall-haltigen Fraktionen NE_{S} und die verbleibenden metallarmen Fraktionen NM_{S}. Die Klassiereinrichtung K_{S}1 sieht ferner vor, dass metallarme Fraktionen NM_{S} mit einem Korndurchmesser vorzugsweise < 6 mm als eine Sand-Fraktion Sand_{S} abgetrennt werden.

Die verbleibende grobkörnige metallarme Fraktion NM_{S} wird anschließend mit einer Dichtetrennungseinrichtung D_{S}1 in eine Schwergut-Fraktion SG_{S} sowie eine hochdichte Restfraktion Rest aufgetrennt. Damit soll verhindert werden, dass bei der Weiterbehandlung der Schwergut-Fraktion SG_{S} in nachgeschalteten Zerkleinerungsaggregaten noch hochabrasive und scharfkantige Materialien, wie zum Beispiel Edelstahlkugeln, im Mahlraum vorhanden sind. Zusätzlich kann an dieser Stelle nochmals ein Metallabscheider installiert werden, um letzte verschleißfördemde, massive Metallverunreinigungen abzutrennen. Zusammenfassend liefert der Vorprozess Vor_{S} demnach eine Eisen-Fraktion Fe, eine Stahl-Fraktion V2A, eine Nichteisen-Metallhaltige Fraktion NE_{S}, eine Sand-Fraktion Sands und eine Schwergut-Fraktion SG_{S}.

Im Vorprozess Vor_{L} wird ausgehend von der Shredder-Leichtfraktion SLF zunächst eine Schaumstoff-Fraktion PU - überwiegend aus dem leicht-flugfähigen Polyurethan bestehend - in der Absaugeinrichtung AB_{L}1 abgetrennt. Die abgetrennten Schaumstoffstücke werden pneumatisch in einen Presscontainer gefördert und dort automatisch verdichtet. Diese Fraktion kann direkt verwertet oder gegebenenfalls einer weiteren, hier nicht weiter ausgeführten Veredelungsstufe zugeführt werden.

Die verbleibende Fraktion wird nun in einem ersten Zerkleinerungsaggregat Z_{L}1 aufgeschlossen, und zwar derart, dass ein Austrag des Aggregats Z_{L}1 Partikel mit einem Durchmesser < 50 mm enthält. Um eine Beanspruchung des Zerkleinerungsaggregats Z_{L}1 möglichst geringzuhalten, kann vorgesehen sein, dass eine hier nicht dargestellte Klassiereinrichtung zur Separation und Zuführung einer Fraktion mit einem Durchmesser von > 50 mm vorgeschaltet wird. Von der zerkleinerten Fraktion wird mittels eines Permanent-Magnetscheiders PM_{L}1 eine Eisenfraktion Fe und eine Stahlfraktion V2A abgetrennt. Die verbleibende nicht-ferromagnetische Fraktion NF_{L} wird nun einem zweiten Zerkleinerungsaggregat Z_{L}2 zugeführt, in dem ein weiterer Aufschluss des Materials erfolgt. Ein Austrag des Zerkleinerungsaggregates Z_{L}2 wird dabei mit < 10 mm ausgelegt. Auch hier kann über eine nicht dargestellte Klassiereinrichtung die Beschickung des Zerkleinerungsaggregates Z_{L}2 auf eine Fraktion mit einem Durchmesser > 10 mm beschränkt werden.

Von der nun gut aufgeschlossenen nicht-ferromagnetischen Fraktion NF_{L} wird in einer weiteren Klassiereinrichtung K_{L}1 eine feinkörnige Sand-Fraktion Sand_{L} abgetrennt. Eine Korngröße der Sand-Fraktion Sand_{L} wird vorzugsweise auf < 4 mm festgelegt. Die verbleibende Fraktion wird einer Windsichtung und Dichtetrennung in einer entsprechenden Einrichtung D_{L}1 unterzogen. In der Einrichtung D_{L}1 wird eine leichte Fraktion aus Flusen (Rohflusen-Fraktion Flusenᵣₒₕ) mittels Querstromsichter über eine Schwergutklappe geblasen. Aufgrund der vorherigen Förderung auf einem Vibrationsförderer hat sich das schwerere Material bereits nach unten abgesetzt, so dass die unterliegende Schwerfraktion zwangsläufig nach unten in einen Schwergutaustrag fällt (Schwergut-Fraktion SG_{L}). Zusammengefasst können in dem Vorprozess Vor_{L} die End- und Zwischenprodukte Schaumstoffstücke PU, Eisen Fe, Stahl V2A, Sand_{L}, Flusen Flusenᵣₒₕ und Schwergut SG_{L} bereitgestellt werden. Die während der Bearbeitung in den Zerkleinerungsaggregaten Z_{L}1 und Z_{L}2 anfallenden schwermetall- und organikhaltigen Stäube und Schlämme werden der Restfraktion Rest zugeführt.

Im Veredelungsprozess V wird die Rohflusen-Fraktion Flusenᵣₒₕ soweit gereinigt, dass sie einer rohstofflichen oder energetischen Verwertung zugänglich ist. Die dem vorliegenden Veredelungsprozess V zugrunde liegende Anforderung ist die Herstellung eines schwermetallabgereicherten Materials für den Einsatz in Klärschlamm-Verbrennungsanlagen, Zementwerken oder in Hochöfen. Eine Aufarbeitung erfolgt in Hinsicht auf die in solchen Prozessen geltenden Anforderungen, wie Förder- und Einblasfähigkeit sowie Halogengehalt. Insbesondere aber soll der Gehalt an Kupfer, Zink und Blei abgesenkt werden.

Zunächst wird dazu die Rohflusen-Fraktion Flusenᵣₒₕ direkt aus dem Querstromsichter des Hauptprozesses SR_{H} mechanisch über ein Förderband in eine Pralltellermühle M_{V} gefördert. In der Mühle erfolgt eine Verkugelung der von Kabelummantelungen freigelegten, jedoch verhakten Kupferlitzen sowie anderer Metalldrähte und ein Abreiben von Stäuben, die sich im Fasergeflecht festgesetzt haben. Der organische Faseranteil wird dabei nicht zerkleinert. Das so behandelte Gut wird anschließend mit einer Absaugeinrichtung AB_{V} entnommen. In die Absaugeinrichtung AB_{V} ist eine Staubabtrennung integriert, so dass der abgeriebene, schwermetallangereicherte Staubanteil vom Rest des Stoffstromes separiert und über Filteranlagen in einer Staub-Fraktion NE_{Staub} konzentriert werden kann.

Das entstaubte Gut wird pneumatisch auf Luft-Setz-Tische gefördert (Dichtetrennungseinrichtung D_{V}). Hier erfolgt die Abtrennung der verkugelten Kupferlitzen und sonstigen Metalldrähte. Die kupferreiche NE-Metall-Fraktion NE_{V} dieser Veredelungsstufe kann mit kupferreichenFraktionen aus dem Hauptprozess SR_{H} vereint werden oder alternativ in die NE-Metallaufbereitung übergeleitet werden. Die verbleibende Leichtfraktion bildet die Flusenfraktion Flusen_{rein,} die pneumatisch in einen Presscontainer gesaugt wird. Für einen Einsatz im Hochofen ist nachgeschaltet eine Brikettierung oder Pelletierung möglich.

Im Hauptprozess SR_{H} werden zunächst die Sand-Fraktionen Sand_{L}, Sand_{S} zu einer gemeinsamen Sand-Fraktion Sand zusammengefasst. Gegebenenfalls kann diese Fraktion einer weiteren, hier nicht dargestellten Veredelungsstufe zugeführt werden.

Auch die Schwergut-Fraktionen SG_{L} und SG_{S} werden zu einer gemeinsamen Schwergut-Fraktion SG zusammengefasst. Diese wird nachfolgend in einem weiteren Zerkleinerungsaggregat Z_{H}1 erneut aufgeschlossen. Ein Austrag der Zerkleinerungsaggregate Z_{H}1 wird mit < 8 mm ausgelegt. Das Zerkleinerungsaggregat Z_{H}1 ist üblicherweise als Schneidmühle ausgebildet, damit an dieser Stelle ein optimaler Materialaufschluss erreicht wird. Nach der Zerkleinerung erfolgt eine Dichtetrennung auf Luft-Setz-Tischen (Dichtetrennungseinrichtung D_{H}1). Die abgetrennte Leichtfraktion besteht überwiegend aus Kunststoff in granulierter Form. Das Granulat kann gegebenenfalls in einem eigenständigen Veredelungsprozess weiter aufgearbeitet werden. Die verbleibende Schwerfraktion NE_{H} besteht größtenteils aus Nicht-Eisenmetallen, und zwar überwiegend aus Kupfer-Litzen. Die Fraktion NE_{H} kann daher bereits an dieser Stelle dem Prozess entzogen werden, aber auch mit der Nichteisen-Metall-haltigen Fraktion NE_{S} zu einer gemeinsamen Fraktion NE zusammengeführt werden und gemeinsam aufbereitet werden.

Die Aufbereitung der Nichteisen-Metall-haltigen Fraktion NE kann im Wesentlichen mittels einer Sandflotationsanlage SF1 und eines optischen Sortierers OS1 erfolgen. Mit einer Sandflotation ist es möglich, eine Leichtmetall-Fraktion vorwiegend aus Aluminium und Magnesium von einer Schwermetall-Fraktion trockenmechanisch zu trennen. Anzumerken ist, dass der hier verwendete Sand als Separationsmedium nichts mit der abgetrennten Fraktion Sand aus den Shredder-Rückständen zu tun hat. Die Schwermetalle sinken in das Sandbett, während die Leichtmetalle auf dem Sandbett aufschwimmen. Über eine Trennscheide werden ein leichtmetallhaltiger Oberstrom und der mit den Schwermetallen angereicherte Unterstrom getrennt. In einem zur Sandflotation gehörenden Prozessschritt werden die Metallkonzentrate wieder vom Trennmedium Sand getrennt. Die abgetrennte Aluminium- und Magnesium-Fraktion Al/Mg kann gegebenenfalls noch weiter aufgetrennt werden.

Die abgetrennte Schwerfraktion (insbesondere Zink Zn, Kupfer Cu, Messing, Blei Pb sowie eventuell V4A-Stahl) wird durch den optischen Sortierer OS1 in Buntmetalle Kupfer/Messing und sonstige Metalle aufgetrennt. Eventuell hier anfallende nicht-metallische Reste können je nach Menge und Zusammensetzung an geeigneter Stelle, wie beispielsweise hier in den Vorprozess Vor_{L}, eingespeist werden. Zusammengefasst werden im Hauptprozess SR_{H} mit anschließender Nichteisen-Metall-Aufbereitung eine Al/Mg-Fraktion, eine Cu/Messing-Fraktion, eine Fraktion mit sonstigen Metallen, eine Sand-Fraktion Sand und eine Granulat-Fraktion Granulat bereitgestellt.

### Bezugszeichenliste

- AB_{L}1, AB_{V}: Absaugeinrichtungen
- Al/Mg: Leichtmetall-Fraktion
- Cu/Messing: Buntmetall-Fraktion
- D_{H}1, D_{L}1, D_{S}1, D_{V}: Dichtetrennungseinrichtungen,
- Fe: Eisen-Fraktion
- Flusenᵣₑᵢₙ: chlor-und metallarme Granulat-Fraktion
- Flusenᵣₒₕ: Flusen-Fraktion
- Granulat: Granulat-Fraktion
- K_{L}1, K_{S}1: Klassiereinrichtungen
- MA_{S}1: Metallabscheider /Allmetaliseparator
- Mv: Pralltellermühle
- NE, NE_{H}, NE_{L}, NE_{S}, NE_{Staub,} NE_{V}: Nichteisen-Metall-haltige Fraktionen
- NF_{L}: nicht-ferromagnetische Fraktion
- NM_{S}: metallarme Fraktion
- OS1: optischer Sortierer
- PM_{L}1, PM_{S}1: Permanent-Magnetscheider
- PU: Schaumstoff-Fraktion
- Rest: Restfraktion
- Sand, Sand_{L}, Sands: Sand-Fraktionen
- SF1: Sandflotationsanlage
- SG, SG_{L}, SG_{S}: Schwergut-Fraktionen
- SLF: Shredder-Leichtfraktion
- Sonstige Metalle: Fraktion mit sonstigen Metallen
- SR_{H}: Hauptprozess
- SS: Shredder-Schrott
- SSF: Shredder-Schwerfraktion
- V: Veredelungsprozess für die Rohflusen-Fraktion
- V2A: Stahl-Fraktion
- Vor_{L}: Vorprozess für die Shredder-Leichtfraktion
- Vor_{S}: Vorprozess für die Shredder-Schwerfraktion
- Z_{L}1, Z_{L}2, Z_{H}1: Zerkleinerungsaggregate

## Patentansprüche

1. Verfahren zur Aufbereitung von Shredder-Rückständen metallhaltiger Abfälle, insbesondere von Fahrzeugkarossen, bei dem in einem Hauptprozess (SR_{H}) eine Rohflusen-Fraktion (Flusenᵣₒₕ) erzeugt wird und von der Rohflusen-Fraktion (Flusenᵣₒₕ) in einem Veredlungsprozess (V) eine metallarme Flusen-Fraktion (Flusenᵣₑᵢₙ) abgetrennt wird, wobei dem Hauptprozess (SR_{H}) ein Stoffstrom zugeführt wird, der erhalten ist durch die Auftrennung der Shredder-Rückstände in eine Shredder-Leichtfraktion (SLF) und eine Shredder-Schwerfraktion (SSF) und durch die Aufbereitung der Shredder-Leichtfraktion (SLF) in einem Vorprozess (Vor_{L},), wobei der Hauptprozess (SR_{H}) und der Vorprozess (Vor_{L},) zur Aufbereitung der Shredder-Leichtfraktion eine Abscheidung von wenigstens einer ferromagnetischen Fraktion (Fe,V2A), einer Nichteisen-Metall-haltigen Fraktion (NE), einer Granulat-Fraktion (Granulat) und einer Sand-Fraktion (Sand) aufweisen.

2. Verfahren nach Anspruch 1, **dadurch gekennzeichnet, dass** dem Hauptprozess (SR_{H}) ein weiterer Stoffstrom zugeführt wird, der erhalten ist durch die Auftrennung der Shredder-Rückstände in die Shredder-Leichtfraktion (SLF) und die Shredder-SchwerFraktion (SSF) und durch die Aufbereitung der Shredder-Schwerfraktion (SSF) in einem Vorprozess, wobei die Prozesse eine Abscheidung wenigstens einer ferromagnetischen Fraktion (Fe,V2A), einer Nichteisen-Metall-haltigen Fraktion (NE), einer Granulat-Fraktion (Granulat) und einer Sand-Fraktion (Sand) aufweisen.

3. Verfahren nach Anspruch 1 oder 2, **dadurch gekennzeichnet, dass** die Rohflusen-Fraktion (Flusenᵣₒₕ) in mindestens eine, insbesondere mindestens zwei der Fraktionen metallhaltige Staub-Fraktion (NE_{Staub}), metallarme Flusen-Fraktion (Flusenᵣₑᵢₙ), Metall-Fraktion (NE_{V}) aufgetrennt wird.

4. Verfahren nach einem der Ansprüche 1 bis 3, **dadurch gekennzeichnet, dass** die Rohtlusen-Fraktion (Flusenᵣₒₕ) in mindestens einem, insbesondere in mindestens zwei der Prozessschritte Metallverkugelung, Entstaubung und/oder Dichtetrennung aufgetrennt wird, wobei diese Prozessschritte vorteilhaft in der angegebenen Reihenfolge durchgeführt werden.

5. Verfahren nach einem der vorherstehenden Ansprüche, **dadurch gekennzeichnet, dass** die Rohflusen-Fraktion (Flusenᵣₒₕ) zumindest aus der Shredder-Leichtfraktion (SLF) und insbesondere nur aus dieser abgetrennt wird.

6. Verfahren nach einem der vorhergehenden Ansprüche, **dadurch gekennzeichnet, dass** die Shredder-Leichtfraktion (SLF) einer weiteren Vorbehandlung mittels eines Magnetscheiders zur Abtrennung von ferromagnetischen Restfraktionen unterworfen wird.

7. Verfahren nach einem der vorhergehenden Ansprüche, **dadurch gekennzeichnet, dass** im Vorprozess (Vor_{L}) ausgehend von der Shredder-Leichtfraktion (SLF) durch mindestens einen, insbesondere mindestens zwei der Prozessschritte, vorteilhaft in der angegebenen Reihenfolge, Zerkleinerung, Metallabscheidung, Klassierung, Dichtetrennung mindestens eine, vorteilhaft mindestens zwei und insbesondere mindestens drei der Fraktionen eisenhaltige bzw. ferromagnetische Fraktionen (Fe,V2A), feinkörnige Sand-Fraktion (Sand_{L}), Rohflusen-Fraktion (Flusenᵣₒₕ) und/oder (grob)kömige Schwergut-Fraktion (SG_{L}) abgetrennt wird, wobei vorzugsweise zumindest die letztgenannte Fraktion erhalten wird.

8. Verfahren nach einem der Ansprüche 1 bis 7, **dadurch gekennzeichnet, dass** von der Shredder-Leichtfraktion (SLF) im Vorprozess (Vor_{L}) insbesondere mittels einer Absaugeinrichtung (AB_{L}) zusätzlich eine Schaumstoff-Fraktion (PU) abgetrennt wird.

9. Verfahren nach Anspruch 7 oder 8, **dadurch gekennzeichnet, dass** insbesondere durch die Zerkleinerung und/oder Klassierung mindestens 60 Gew.%, insbesondere mindestens 80 Gew.% der Schwergut-Fraktion (SG_{L}) mit einem Durchmesser von 4 bis 10 mm erhalten werden.

10. Verfahren nach einem der Ansprüche 2 bis 9, **dadurch gekennzeichnet, dass** von der Shredder-Schwerfraktion (SSF) im Vorprozess (Vor_{S}) durch mindestens einen der Prozesse Metallabscheidung, Klassierung und/oder Dichtetrennung mindestens eine Nichteisen-Metall-haltige Fraktion (NE_{S}), feinkörnige, metallarme Sand-Fraktion (Sand_{S}), hochdichte Restfraktion (Rest) und/oder Schwergut-Fraktion (SG_{S}) abgetrennt wird, wobei vorzugsweise mindestens zwei, insbesondere mindestens drei dieser Fraktionen und besonders vorteilhaft zumindest die letztgenannte Fraktion erhalten wird.

11. Verfahren nach Anspruch 10, **dadurch gekennzeichnet, dass** durch die Klassierung mindestens 60 Gew.%, insbesondere mindestens 80 Gew.% der Schwergut-Fraktion (SG_{S}) mit einem Durchmesser von > 6 mm erhalten werden.

12. Verfahren nach einem der Ansprüche 7 bis 11, **dadurch gekennzeichnet, dass** im Hauptprozess (SR_{H}) die Schwergut-Fraktion/en (SG_{L}, SG_{S}) mittels eines Zerkleinerungsaggregates (Z_{H}1) aufgeschlossen und über eine Dichtetrennungseinrichtung (D_{H}1) in die Granulat-Fraktion (Granulat_{H}) und/oder in eine angereicherte, Nichteisen-Metäll-haltige Fraktion (NE_{H}) aufgetrennt wird/werden.

13. Verfahren nach Anspruch 12, **dadurch gekennzeichnet, dass** ein Austrag des Zerkleinerungsaggregates (Z_{H}1) mit < 8 mm vorgegeben wird.

14. Verfahren nach einem der Ansprüche 2 bis 13, **dadurch gekennzeichnet, dass** die Metall-Fraktionen (NE_{H}, NE_{S}) zur gemeinsamen Metall-Fraktion (NE) zusammengefasst werden.

15. Verfahren nach einem der vorhergenannten Ansprüche, **dadurch gekennzeichnet, dass** eine Verkugelung von Metalldrähten und -Litzen in der Rohflusen-Fraktion erfolgt.

16. Verfahren nach einem der vorhergenannten Ansprüche, **dadurch gekennzeichnet, dass** eine Abtrennung schwermetallhaltiger Stäube erfolgt.

17. Verfahren nach einem der vorhergenannten Ansprüche, **dadurch gekennzeichnet, dass** eine Abtrennung verkugelter Metalldrähte und -Litzen erfolgt.

18. Verfahren nach einem der vorhergenannten Ansprüche, **dadurch gekennzeichnet, dass** die bei der Abtrennung im Veredelungsprozess (V) anfallende, Nichteisen-Metall-haltige Fraktion (NE_{V}) je nach Menge und Zusammensetzung in einen Aufbereitungsprozess der Nichteisen-Metall-haltigen Fraktion (NE) integriert wird.

19. Verfahren nach einem der vorhergenannten Ansprüche, **dadurch gekennzeichnet, dass** eine Pelletierung oder Brikettierung der Flusen-Fraktion (Flusenᵣₑᵢₙ) erfolgt.

20. Verfahren nach einem der vorhergenannten Ansprüche, **dadurch gekennzeichnet, dass** die Flusen-Fraktion (Flusenᵣₑᵢₙ) mindestens die ersten beiden der folgenden Charakteristika aufweist:
- einen Heizwert von > 20 MJ/kg
- einen Cl-Gehalt < 3,0 Gew.%
- einen Zn-Gehalt < 1,0 Gew.%
- einen Cu-Gehalt < 0,2 Gew.%
- einen Pb-Gehalt < 0,1 Gew.%

## Claims

1. Method for treating shredder residues of metal-containing waste, especially vehicle bodies, in which method, in a main process (SR_{M}), a crude fluff fraction (fluff_{crude}) is produced and, in a refining process (R), a low-metal fluff fraction (fluffₚᵤᵣₑ) is separated from the crude fluff fraction (fluff_{crude}), a material stream being fed to the main process (SR_{M}), which material stream is obtained by the splitting of the shredder residues into a shredder light fraction (SLF) and a shredder heavy fraction (SHF) and by the treatment of the shredder light fraction (SLF) in a preliminary process (Pre_{L}), the main process (SR_{M}) and the preliminary process (Pre_{L}) for treating the shredder light fraction having separation of at least a ferromagnetic fraction (Fe, V2A), a non-ferrous-metal-containing fraction (NF), a granulate fraction (granulate) and a sand fraction (sand).

2. Method according to Claim 1, **characterized in that** a further material stream is fed to the main process (SR_{M}), which further material stream is obtained by the splitting of the shredder residues into the shredder light fraction (SLF) and the shredder heavy fraction (SHF) and by the treatment of the shredder heavy fraction (SHF) in a preliminary process, the processes having separation of at least a ferromagnetic fraction (Fe, V2A), a non-ferrous-metal-containing fraction (NF), a granulate fraction (granulate) and a sand fraction (sand).

3. Method according to Claim 1 or 2, **characterized in that** the crude fluff fraction (fluff_{crude}) is split into at least one, preferably at least two of the fractions of metal-containing dust fraction (NF_{dust),} low-metal fluff fraction (fluffₚᵤᵣₑ) and metal fraction (NF_{V}).

4. Method according to one of Claims 1 to 3, **characterized in that** the crude fluff fraction (fluff_{crude}) is split in at least one, in particular in at least two of the process steps of metal balling, dust removal and/or density separation, these process steps advantageously being carried out in the specified order.

5. Method according to one of the preceding claims, **characterized in that** the crude fluff fraction (fluff_{crude}) is separated at least from the shredder light fraction (SLF) and, in particular, only from the latter.

6. Method according to one of the preceding claims, **characterized in that** the shredder light fraction (SLF) is subjected to a further pre-treatment by means of a magnetic separator for the separation of ferromagnetic residual fractions.

7. Method according to one of the preceding claims, **characterized in that** in the preliminary process (Pre_{L}), starting from the shredder light fraction (SLF), by at least one, in particular at least two of the process steps, advantageously in the specified order, of crushing, metal separation, classification and density separation, at least one, advantageously at least two and, in particular, at least three of the fractions iron-containing or ferromagnetic fractions (Fe, V2A), fine-grained sand fraction (sand_{L}), crude fluff fraction (fluff_{crude}) and/or (coarse-)grained heavy material fraction (HM_{L}) is/are separated, preferably at least the lastmentioned fraction being obtained.

8. Method according to one of Claims 1 to 7, **characterized in that** from the shredder light fraction (SLF), in the preliminary process (Pre_{L}), a foamed plastic fraction (PU) is separated in particular by means of a suction device (SU_{L}).

9. Method according to Claim 7 or 8, **characterized in that**, in particular as a result of the crushing and/or classification, at least 60% by weight, in particular at least 80% by weight of the heavy material fraction (HM_{L}) is obtained with a diameter of from 4 to 10 mm.

10. Method according to one of Claims 2 to 9, **characterized in that** at least one non-ferrous-metal-containing fraction (NF_{S}), fine-grained, low-metal sand fraction (sand_{S}), highly dense residual fraction (residual) and/or heavy material fraction (HM_{S}) are/is separated from the shredder heavy fraction (SHF) in the preliminary process (Pre_{S}) by at least one of the processes of metal deposition, classification and/or density separation, preferably at least two, in particular at least three of these fractions and particularly advantageously at least the lastmentioned fraction being obtained.

11. Method according to Claim 10, **characterized in that**, as a result of the classification, at least 60% by weight, in particular at least 80% by weight of the heavy material fraction (HM_{S}) is obtained with a diameter of > 6 mm.

12. Method according to one of Claims 7 to 11, **characterized in that** in the main process (SR_{M}) the heavy material fraction(s) (HM_{L}, HM_{H}) is/are disintegrated by means of a crushing unit (CR_{M}1) and are split by a density separator (DS_{H}1) into the granulate fraction (granulate_{M}) and/or into an enriched, non-ferrous-metal-containing fraction (NF_{M}).

13. Method according to Claim 12, **characterized in that** an output of the crushing unit (CR_{M}1) is predefined at < 8 mm.

14. Method according to one of Claims 2 to 13, **characterized in that** the metal fractions (NF_{M}, NF_{H}) are combined into the common metal fraction (NF).

15. Method according to one of the preceding claims, **characterized in that** metal wires and cords are balled in the crude fluff fraction.

16. Method according to one of the preceding claims, **characterized in that** separation of heavy-metal-containing dusts takes place.

17. Method according to one of the preceding claims, **characterized in that** separation of balled metal wires and cords takes place.

18. Method according to one of the preceding claims, **characterized in that** the non-ferrous-metal-containing fraction (NF_{R}) obtained in the separation in the refining process (R) is integrated, according to quantity and composition, into a reprocessing process for the non-ferrous-metal-containing fraction (NF).

19. Method according to one of the preceding claims, **characterized in that** pelletization or briquetting of the fluff fraction (fluffₚᵤᵣₑ) takes place.

20. Method according to one of the preceding claims, **characterized in that** the fluff fraction (fluffₚᵤᵣₑ) has at least the first two of the following characteristics:
- a heat value of > 20 MJ/kg
- a Cl content of < 3.0% by weight
- a Zn content of < 1.0% by weight
- a Cu content of < 0.2% by weight
- a Pb content of < 0.1% by weight.

## Revendications

1. Procédé de préparation de résidus de déchiquetage de déchets contenant des métaux, en particulier de carrosseries de véhicule, dans lequel
une fraction (Flusenᵣₒₕ) volante brute est formée dans un traitement principal (SR_{H}) et une fraction volante (Flusenᵣₑᵢₙ) pauvre en métal est séparée de la fraction volante brute (Flusenᵣₒₕ) dans un traitement d'épuration (V),
un écoulement de matière obtenu par la séparation des résidus de déchiquetage en une fraction légère de déchiquetage (SLF) et une fraction lourde de déchiquetage (SSF) et par le traitement de la fraction légère de déchiquetage (SLF) dans un traitement préalable (Vor_{L}) est apporté dans le traitement principal (SR_{H}),
le traitement principal (SR_{H}) et le traitement préalable (Vor_{L}) présentant pour la préparation de la fraction légère de déchiquetage une séparation d'au moins une fraction ferromagnétique (Fe, V2A), une fraction (NE) contenant des métaux non ferreux, une fraction (Granulat) de granulés et une fraction de sable (Sand).

2. Procédé selon la revendication 1, **caractérisé en ce qu'**un autre écoulement de matière obtenu par la séparation des résidus de déchiquetage en la fraction légère de déchiquetage (SLF) et la fraction lourde de déchiquetage (SSF) et par le traitement de la fraction lourde de déchiquetage (SSF) dans un traitement préalable est apporté au traitement principal (SR_{H}), les traitements présentant une séparation d'au moins une fraction ferromagnétique (Fe, V2A), une fraction (NE) contenant des métaux non ferreux, une fraction de granulés (Granulat) et une fraction de sable (Sand).

3. Procédé selon les revendications 1 ou 2, **caractérisé en ce que** la fraction volante brute (Flusenᵣₒₕ) est séparée en au moins une et en particulier au moins deux fractions formées par une fraction (NE_{Staub}) de poussières contenant des métaux, une fraction volante (Flusenᵣₑᵢₙ) pauvre en métaux et une fraction métallique (NE_{V}).

4. Procédé selon l'une des revendications 1 à 3, **caractérisé en ce que** la fraction volante brute (Flusenᵣₒₕ) est séparée dans au moins une et en particulier deux des étapes de traitement transformation des métaux en billes, dépoussiérage et/ou séparation gravimétrique, ces étapes de traitement étant avantageusement exécutées dans la succession ci-dessus.

5. Procédé selon l'une des revendications précédentes, **caractérisé en ce que** la fraction volante brute (Flusenᵣₒₕ) est séparée au moins de la fraction légère de déchiquetage (SLF) et en particulier uniquement de cette dernière.

6. Procédé selon l'une des revendications précédentes, **caractérisé en ce que** la fraction légère de déchiquetage (SLF) subit un autre pré-traitement à l'aide d'un séparateur magnétique qui sépare les fractions ferromagnétiques résiduelles.

7. Procédé selon l'une des revendications précédentes, **caractérisé en ce que** dans le traitement préalable (Vor_{L}), partant de la fraction légère de déchiquetage (SLF), on sépare par au moins une et en particulier au moins deux des étapes du traitement, avantageusement dans la succession indiquée, à savoir les étapes de déchiquetage, de séparation des métaux, de classification, de séparation gravimétrique, au moins une, avantageusement au moins deux et en particulier au moins trois des fractions que sont la fraction contenant du fer ou ferromagnétique (Fe, V2A), la fraction de sable à grains fins (Sand_{L}), la fraction volante brute (Flusenᵣₒₕ) et/ou la fraction lourde (SG_{L}) en grains (grossiers), ce qui permet d'obtenir de préférence au moins la dernière de ces fractions.

8. Procédé selon l'une des revendications 1 à 7, **caractérisé en ce qu'**une fraction de mousse (PU) est en outre séparée de la fraction légère de déchiquetage (SLF) dans le traitement préalable (Vor_{L}), en particulier au moyen d'un dispositif d'aspiration (AB_{L}).

9. Procédé selon les revendications 7 ou 8, **caractérisé en ce qu'**au moins 60 % en poids et en particulier au moins 80 % en poids de la fraction lourde (SG_{L}) d'un diamètre de 4 à 10 mm sont obtenus par le déchiquetage et/ou la classification.

10. Procédé selon l'une des revendications 2 à 9, **caractérisé en ce qu'**au cours du traitement préalable (Vor_{S}), on sépare de la fraction lourde de déchiquetage (SSF) au moins une fraction (NE_{S}) contenant des métaux non ferreux, une fraction de sable (Sand_{S}) en grains fins et pauvre en métaux, une fraction résiduelle (Rest) à haute densité et/ou une fraction lourde (SG_{S}) par au moins l'un des traitements séparation des métaux, classification et/ou séparation gravimétrique, au moins deux, en particulier au moins trois de ces fractions et de façon particulièrement avantageuse au moins la dernière de ces fractions étant ainsi obtenues.

11. Procédé selon la revendication 10, **caractérisé en ce que** la classification permet d'obtenir au moins 60 % et en particulier au moins 80 % en poids de la fraction lourde (SG_{S}) d'un diamètre > 6 mm.

12. Procédé selon l'une des revendications 7 à 11, **caractérisé en ce qu'**au cours du traitement principal (SR_{H}), la ou les fractions lourdes (SG_{L}, SGₛ) sont séparées au moyen d'une machine de déchiquetage (Z_{H}1) et par un dispositif de séparation densimétrique (D_{H}1) en la fraction de granulés (Granulat_{H}) et/ou en une fraction enrichie (NE_{H}) contenant des métaux non ferreux.

13. Procédé selon la revendication 12, **caractérisé en ce que** le produit extrait de la machine de déchiquetage (Z_{H}1) est de < 8 mm.

14. Procédé selon l'une des revendications 2 à 13, **caractérisé en ce que** les fractions métalliques (NE_{H}, NE_{S}) sont rassemblées en une fraction métallique commune (NE).

15. Procédé selon l'une des revendications qui précèdent, **caractérisé en ce qu'**il réalise une transformation de fils et de tresses métalliques en billes dans la fraction volante brute.

16. Procédé selon l'une des revendications qui précèdent, **caractérisé en ce qu'**il présente une séparation des poussières contenant des métaux lourds.

17. Procédé selon l'une des revendications qui précèdent, **caractérisé en ce qu'**il inclut une séparation des fils et tresses métalliques transformés en billes.

18. Procédé selon l'une des revendications qui précèdent, **caractérisé en ce que** la fraction (NE_{V}) contenant des métaux non ferreux et produite de la séparation au cours du traitement d'épuration (V) est intégrée en fonction de sa quantité et de sa composition dans un traitement de préparation de la fraction (NE) contenant des métaux non ferreux.

19. Procédé selon l'une des revendications qui précèdent, **caractérisé en ce qu'**il présente une pelletisation ou une transformation en briquettes de la fraction volante (Flusenᵣₑᵢₙ).

20. Procédé selon l'une des revendications qui précèdent, **caractérisé en ce que** la fraction volante (Flusenᵣₑᵢₙ) présente au moins les deux premières des caractéristiques suivantes :
- un pouvoir calorifique > 20 MJ/kg
- une teneur en Cl < 3,0 % en poids,
- une teneur en Zn < 1,0 % en poids,
- une teneur en Cu < 0,2 % en poids,
- une teneur en Pb < 0,1 % en poids.
